# EUROPÄISCHE PATENTSCHRIFT

(11) **EP 0 627 677 B1**
(45) Veröffentlichungstag und Bekanntmachung des Hinweises auf die Patenterteilung: **16.12.1998**
(21) Anmeldenummer: 94105629.3
(22) Anmeldetag: 12.04.1994
(51) Int. Cl.: G05D 1/02, B61C 13/00, B60T 7/22, B60K 31/00

(54) **Übertragung von Steuersignalen an ein Fahrzeug mit Prellschaltern**
Control signal transmission to a vehicle with crash sensing switches
Transmission des signaux de commande à un véhicule par des commutateurs de collision

(30) Priorität: 02.06.1993 US 71185
(43) Veröffentlichungstag der Anmeldung: 07.12.1994
(73) Patentinhaber: Telelift GmbH, 82178 Puchheim (DE)
(72) Erfinder: Tyler, Tommy N., Broomfield, Colorado 80020 (US)
(74) Vertreter: Herrmann-Trentepohl, Werner, Dipl.-Ing.

(56) Entgegenhaltungen:
- EP-A- 0 264 532
- EP-A- 0 534 897
- DE-C- 4 042 369
- FR-A- 2 506 476
- GB-A- 1 190 211
- US-A- 5 036 935
- PATENT ABSTRACTS OF JAPAN vol. 7, no. 26 (P-172) 2. Februar 1983 & JP-A-57 178 508 (MITSUBISHI DENKI KK) 2. November 1982

## Beschreibung

Die vorliegende Erfindung bezieht sich auf ein Verfahren und eine Vorrichtung nach den Oberbegriffen der Ansprüche 1 und 23.

Ein derartiger Stand der Technik ist aus der US-A-5 036 935 bekannt. Aus der JP 57 178 508 sind ferner Fahrzeuge mit Hindernisdetektoren bekannt, welche Signale an eine Steuerung abgeben.

Bekannt sind selbstversorgte, unbemannte Materialförderfahrzeuge des Typs, der verwendet wird, um automatisch Material über einen vorbestimmten Weg von einem Punkt zu einem anderen innerhalb eines Bürogebäudes, einer Fabrik, eines Hospitals oder einem anderen Typ von derartigen Einrichtungen zu transportieren. Insbesondere sind automatisierte Fahrzeuge des beschriebenen Typs, bekannt, welche Prellschalter, Annäherungsdetektoren oder andere Einrichtungen zur Steuerung einer Fahrzeugbewegung aufweisen, wobei die Steuerbefehle einfach durch das Wartungspersonal eingegeben werden können.

In relativ großen Bürogebäuden einschl. von Krankenhäusern ist es vorteilhaft, verschiedene Materialien oder Artikel von einem Punkt zum anderen mit maximaler Effizienz befördern zu können. Um diese Aufgabe zu erfüllen, wurden Fördersysteme entwickelt, welche Spuren und Fahrzeuge einschließen, welche sich entlang dieser Spuren bewegen. Die Fahrzeuge sind ausgelegt zur Aufnahme und Halten von kleinen Artikeln, welche von einer Station nahe einem Abschnitt der Spur zu einer anderen Station nahe einem anderen Abschnitt der Spur transportiert werden sollen. Solche Fahrzeuge werden oft kommerziell als elektrische Spurfahrzeuge (Electric track vehicles, ETV) automatisch geführte Fahrzeuge (automated guided vehicles, AGV) oder elektrifizierte Monoschienensysteme (electrified monorail Systems, EMS) bezeichnet. Die Fahrzeuge werden typischerweise durch einen oder mehrere elektrische AC- oder DC-Motoren angetrieben und erhalten ihre Energie von Batterien an Bord oder von elektrifizierten Kollektorschienen, welche durchgehend entlang der Spur für die Fahrzeuge läuft.

Vom Standpunkt der Steuerstrategie können solche automatischen Förderfahrzeuge vollständig selbstgenügend sein (d.h. autonom den Start, den Stop, die Abbremsung, die Umkehr, usw. basierend auf externen Anregungen, der Zeit, dem Abstand oder anderer Faktoren bestimmend) oder alternativ kann ein solches Fahrzeug vollständig unter der Regie einer Steuerung stehen, die nicht Teil des Fahrzeugs selber ist. Eine übliche Anordnung besteht aus einer Kombination der beiden obigen Strategien, wobei jedes Fahrzeug eine vorbestimmte Steuermöglichkeit aufweist, doch wobei es ebenfalls eine stetige oder periodische Kommunikation mit mindestens einer externen Steuervorrichtung gibt, welche das Verkehrsmanagement, die Aufgabenzuteilung und andere höhere Funktionen übernimmt.

Eine verbreitete Schwierigkeit mit diesen automatischen Förderfahrzeugen tritt auf, wenn eines dieser Fahrzeuge unterwegs eine Fehlfunktion erfährt, so daß das Fahrzeug für eine längere Zeit anhält. In solchen Fällen trifft das Wartungspersonal oft auf Schwierigkeiten bei der Korrektur dieser Fehlfunktion aufgrund des Staus von anderen Fahrzeugen hinter dem ausgefallenen Fahrzeug. Wenn ein Fahrzeug, das entlang eines Weges läuft, der von einer Mehrzahl von Förderfahrzeugen verwendet wird, anhält und die zusätzlichen Fahrzeuge, welche versuchen, entlang des gleichen Weges zu laufen, sich hinter dem ersten Fahrzeug aufstauen, dann halten sie an mittels beispielsweise eines Prellschalters oder anderer Formen von Hindernisdetektoren. In solchen Fällen müssen, um Zugang zur Korrektur der Fehlfunktion am vorderen Ende des Fahrzeugstaus zu halten, im wesentlichen alle Fahrzeuge in dem Stau rückwärts um eine kurze Distanz bewegt werden, insbesondere, wenn die Fahrzeuge in direktem Kontakt zueinander sind. Ein wohlbekannter Weg, um dies auszuführen, ist an elektrischen Spurfahrzeugen in Form von einem 3-Positionskippschalter gegeben, welcher irgendwo an jedem Fahrzeug in solcher Weise vorgesehen ist, daß dieser Kippschalter durch gelerntes Wartungspersonal zugänglich ist. Gewöhnlich hat dieser Schalter drei Positionen, von denen zwei gehalten werden, (d. h. der Schalter bleibt in der Position, welche gewählt wurde) und die dritte ist momentan (d.h. der Schalter bleibt nicht in der Position ohne die ständige Anwendung einer Kraft). In dieser Schalterausführung ist eine der gehaltenen Positionen diejenige Position, welche das Fahrzeug erlaubt, in seiner üblichen Weise zu arbeiten. Eine zweite gehaltene Position des Schalters erlaubt die manuelle Abstellung des Fahrzeugmotors, wobei alle anderen Steuereinrichtungen in der Weise übergangen werden, daß das Fahrzeug solange wie gewünscht anhält. Diese zweite Stellung ist nützlich, wenn eine Wartungsperson das Fahrzeug abstellen möchte, während Arbeiten in seiner Nähe ausgeführt werden, oder wenn die Fahrzeugsteuerung in einer solchen Weise ausgefallen ist, daß der Motor weiterläuft, selbst wenn das Fahrzeug sich nicht bewegen kann. Die momentane dritte Schalterposition kehrt die Versorgung des Fahrzeugmotors um, so daß es rückwärts läuft. Diese Stellung kann verwendet werden, um das Fahrzeug von einem Stau zu entfernen. Der Schalter ist typischerweise von dieser Position durch eine Feder weggespannt, um die Möglichkeit einer unbeabsichtigten Beibehaltung des Schalters in dieser Umkehrposition zu verhindern, da diese Position zu Frontalzusammenstößen zwischen Fahrzeugen führen kann.

Es gibt verschiedene Nachteile bei der Verwendung eines einfachen Kippschalters für die manuelle Übergehung der Steuerung solcher Förderfahrzeuge. Zuerst ist der Schalter oft an einer Seite des Fahrzeuges vorgesehen und kann schwierig zu erreichen sein, wenn diese Seite des Fahrzeuges beispielsweise einer nahen Wand gegenüberliegt. Zweitens erfordert die momentane Betätigung des Schalters zum Zurücksetzen des Fahrzeuges, daß der manuelle Kontakt mit dem Schalter beibehalten wird, während das Fahrzeug sich beispielsweise von dem Stau wegbewegt. Oft steht die Wartungsperson am oberen Ende einer hohen Leiter, welche sich an die an eines Schachtes in einem vielstöckigen Gebäude lehnt, oder sich in einer anderen schwierigen Stelle befindet, wo das Beibehalten eines Kontaktes zum Bewegen des Fahrzeuges gefährlich ist. Die Tatsache, daß der Schalter sich oft an einer relativ ungewöhnlichen Stelle befindet, so daß er außerhalb der Sicht und Versuchung von Benutzern des Fördersystems befindet, verkompliziert das Problem noch weiter. Drittens, wenn das Fahrzeug sich rückwärts bewegt, hat es gewöhnlich volle Geschwindigkeit und volle Leistung. Diese abrupte Bewegung erhöht weiter die Schwierigkeiten für die Beibehaltung der manuellen Steuerung und bringt weitere Gefahr mit sich.

Es wäre vorteilhaft, eine einfache Vorrichtung zur Kontrolle solcher automatischen Förderfahrzeuge auf einer zeitweisen manuellen Basis ohne die vorigen Nachteile zur Verfügung zu haben. Das heißt, es wäre von Vorteil für eine Wartungsperson, wenn sie jedes Fahrzeug leicht in solcher Weise steuern könnte, daß es anhält (zeitweise oder unbegrenzt), sich rückwärtsbewegt oder normal arbeitet, unter Verwendung im wesentlichen von existierenden Fahrzeugkomponenten wie einem Prellschalter.

Es ist die Aufgabe der Erfindung, das gattungsgemäße Verfahren und die gattungsgemäße Vorrichtung derart weiterzuentwickeln, daß ein einfacher Steuermechanismus für ein automatisches Förderfahrzeug bereitgestellt wird, wodurch die Steuerung über eine Hindernisdetektor-Vorrichtung wie beispielsweise einen Prellschalter eingegeben wird. Ferner soll der Steuermechanismus an den im wesentlichen gleichen Förderfahrzeugen implementierbar sein, wie sie gegenwärtig in Gebrauch sind. Das heißt die Erfindung kann im wesentlichen einfach durch Änderungen von Software-Komponenten der Förderfahrzeuge ausgeführt werden, die auf einen Prozessor ansprechen, welcher Hindernis-Detektorsignals empfängt.

Die Erfindung löst diese Aufgabe durch die Gegenstände der Ansprüche 1 und 23.

Mit der Erfindung ist ein Verfahren und eine Vorrichtung zur Steuerung der Bewegung eines automatischen Förderfahrzeuges realisierbar, welches Eingänge von einem Hindernis-Detektor-Mechanismus Prellschalter an dem Fahrzeug empfängt. Insbesondere liefert die Erfindung einen Mechanismus, durch welchen Fahrzeuge, die sowohl eine Hindernis-Detektor-Einrichtung wie auch eine Hindernis-Detektor-Steuermöglichkeit aufweisen, in einer solchen Weise verbessert werden können, daß ein Signal oder ein code-Eingang für die Steuermöglichkeit von der Hindernis-Detektor-Vorrichtung interpretiert wird als Befehl zum Anhalten, Rücksetzen oder Fortsetzen des normalen Förderbetriebes des Fahrzeuges.

Bei der weist ein elektrisches Förderfahrzeug Prellschalter als Hindernis-Detektor-Einrichtung und eine Steuerung zum Steuern im wesentlichen aller Bewegungen des Fahrzeuges auf. Elektrische Signale oder Codes werden durch die Prellschalter in die Steuerung eingegeben und infolgedessen gibt die Steuerung elektrische Steuersignale an den Fahrzeugmotor aus, die die Geschwindigkeit und die Richtung des Fahrzeuges bestimmen. Ein Prellschalter ist an der Vorder- und Rückseite des Fahrzeuges vorgesehen. Jeder Prellschalter hat zumindest zwei Vorgaben: Einen Nicht-Kontakt oder entspannten Zustand, wobei kein Teil des Prellschalters eine Kraft oder einen Druck auf den Prellschalter größer als eine vorbestimmte Konstante registriert, und einen Kontakt oder eingedrückten Zustand, wobei auf irgendeinen Teil des Prellschalters eine Kraft oder ein Druck ausgeübt wird, der größer als die vorbestimmte Konstante ist. Weiterhin kann jeder Prellschalter einen Druck registrieren, der eine variable Zeitlänge andauert. Damit ist gemeint, daß die Prellschalter der Steuerung einen Eingang zuführen können, um zu bestimmen, ob das Fahrzeug nur momentan anstößt oder ob es erzwungenermaßen in Kontakt mit einem anderen Objekt (z.B. einem anderen Fahrzeug) steht. Da die Steuerung diesen Eingang verwenden kann, um die Zeitdauer zu bestimmen, die das Fahrzeug mit einem (oder zwei) seiner

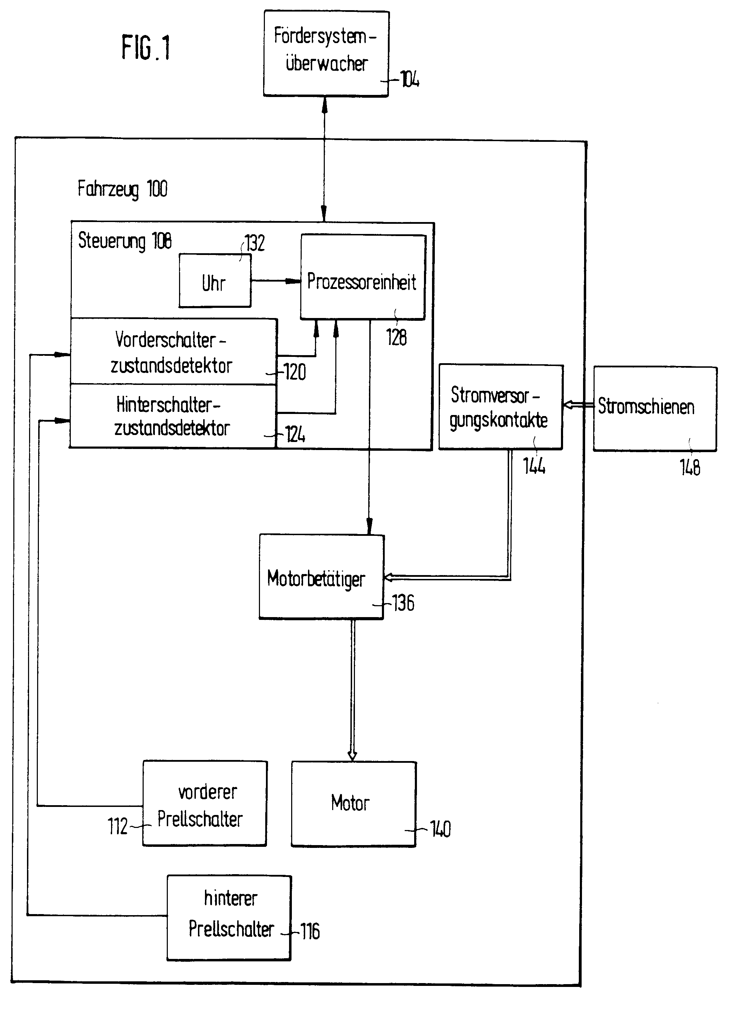

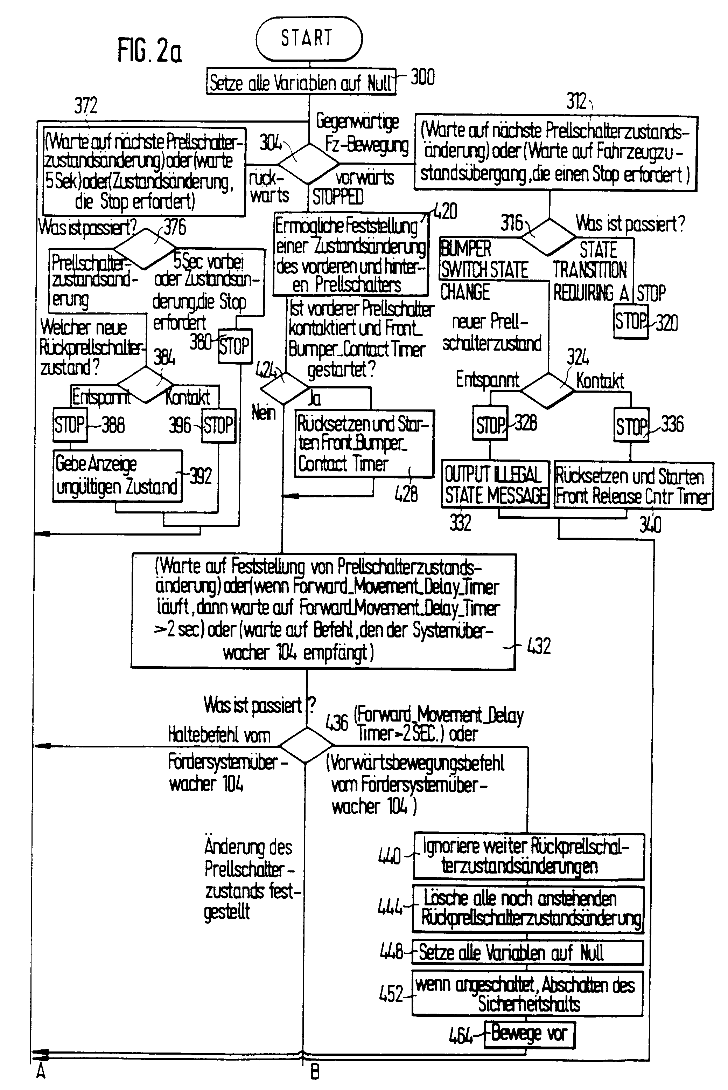

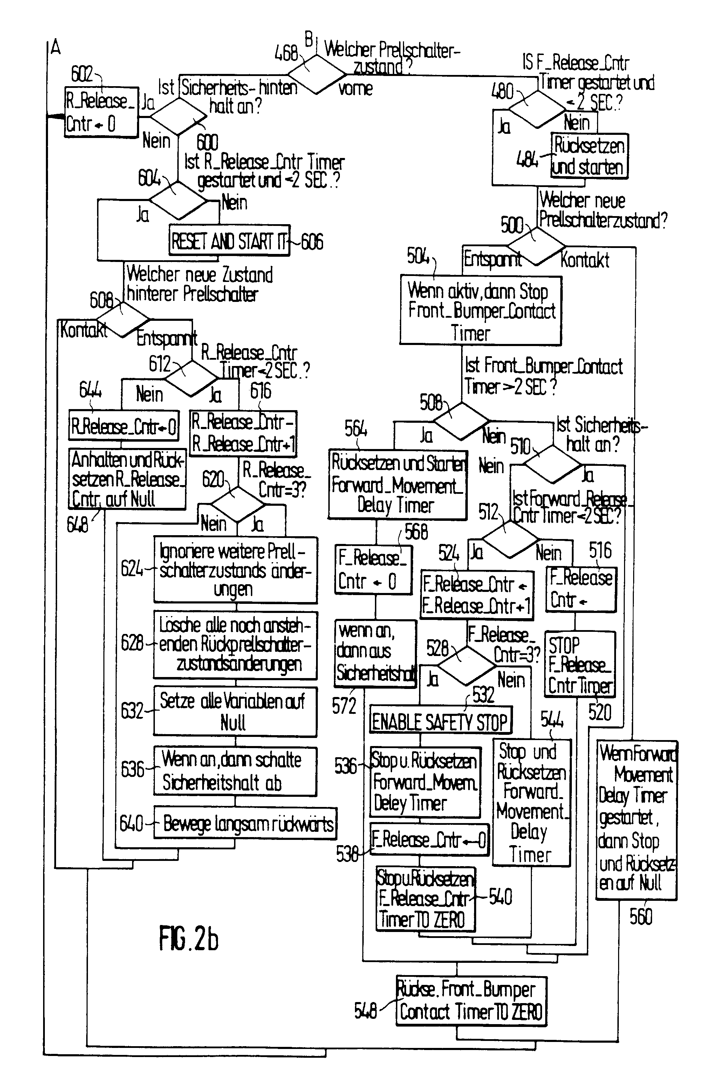

## Patentansprüche

1. Verfahren zur Steuerung eines Fahrzeugs (100) eines Fördersystems, folgende Schritte umfassend:
- Betätigen einer Hindernisdetektorvorrichtung am Fahrzeug und dadurch Erzeugen einer Mehrzahl von vorbestimmten Codes;
- Inbezugsetzen der Codes mit einem vorbestimmten Fahrzeugverhalten;
- Ausführen des vorbestimmten Fahrzeugverhaltens, welches mit den Codes in Beziehung steht,
**dadurch gekennzeichnet, daß**
- die Identifizierung der Codes anhand einer besonderen vorbestimmten Sequenz von zeitbestimmten Prellschalter-Entspannungen und Prellschalter-Drücken erfolgt;
- abhängig von den identifizierten Codes Steuersignale ausgegeben werden, um das vorbestimmte Fahrzeugverhalten auszuführen.

2. Verfahren nach Anspruch 1, **dadurch gekennzeichnet**, daß die Hindernisdetektorvorrichtung mindestens einen vorderen Hindernisdetektor und einen hinteren Hindernisdetektor umfaßt.

3. Verfahren nach Anspruch 2, **dadurch gekennzeichnet**, daß mindestens einer der vorderen Hindernisdetektoren und einer der hinteren Hindernisdetektoren ein Prellschalter ist.

4. Verfahren nach Anspruch 1, **dadurch gekennzeichnet,** daß die Hindernisdetektorvorrichtung kontaktempfindlich ist.

5. Verfahren nach Anspruch 1, **dadurch gekennzeichnet**, daß der Schritt zur Identifizierung eine manuelle Betätigung der Hindernisdetektorvorrichtung zum Eingeben der Codes umfaßt.

6. Verfahren nach Anspruch 1, **dadurch gekennzeichnet**, daß der Schritt zur Inbezugsetzung die Bestimmung einer Bewegung des Fahrzeugs umfaßt.

7. Verfahren nach Anspruch 1, **dadurch gekennzeichnet**, daß die Codes eine vorbestimmte Folge von Übergängen der Hindernisdetektorvorrichtung einschließen, wobei jeder Übergang einer der folgenden ist: (a) Änderung der Hindernisdetektorvorrichtung vom Detektieren eines Hindernisses zu einem Nichtdetektieren eines Hindernisses, und (b) Änderung der Hindernisdetektorvorrichtung von einem Nichtdetektieren eines Hindernisses zu einem Detektieren eines Hindernisses.

8. Verfahren nach Anspruch 7, **dadurch gekennzeichnet,** daß der Schritt zur Identifizierung ein Detektieren der vorbestimmten Folge von Übergängen der Hindernisdetektorvorrichtung einschließt, die von der Eingabe der Codes herkommen.

9. Verfahren nach Anspruch 7, **dadurch gekennzeichnet,** daß der Schritt des Inbezugsetzens eine Identifizierung der vorbestimmten Folge von Übergängen der Hindernisdetektorvorrichtung einschließt.

10. Verfahren nach Anspruch 1, **dadurch gekennzeichnet,** daß der Schritt der Identifizierung einen Schritt einschließt zum Empfangen der Codes von einem vorderen Teil der Hindernisdetektorvorrichtung, wenn das Fahrzeug sich im wesentlichen vorwärtsbewegt, und zum Empfang von Codes von einem rückwärtigen Teil der Hindernisdetektorvorrichtung, wenn das Fahrzeug sich im wesentlichen rückwärts bewegt.

11. Verfahren nach Anspruch 1, worin die Schritte zur Ausführung umfassen:
einen ersten Schritt, durch welchen das Fahrzeug aufhört, auf mindestens einen Code zu antworten; einen zweiten Schritt, wodurch das Fahrzeug sich rückwärts bewegt.

12. Verfahren nach Anspruch 11, **dadurch gekennzeichnet,** daß der erste Schritt das Liefern von mindestens einer visuellen Anzeige und einer akustischen Anzeige, daß das Fahrzeug den Code ignoriert, umfaßt.

13. Verfahren nach Anspruch 11, worin der Code ein Backup-Code ist.

14. Verfahren nach Anspruch 11, worin der zweite Schritt ausgeführt wird, wenn das Fahrzeug anhält und der Code unter Verwendung des rückwärtigen Teils der Hindernisdetektorvorrichtung eingegeben wird.

15. Verfahren nach Anspruch 1, worin ein erster Code aus einer Mehrzahl von Codes identifiziert wird und die Mehrzhal von Codes weiterhin mindestens einen zweiten Code einschließt, der kein vorbestimmtes Zeitintervall umfaßt.

16. Verfahren nach Anspruch 1, worin der Schritt zur Ausführung mindestens eines oder mehrere der folgenden Fahrzeugverhalten veranlaßt:
(a) das Fahrzeug hört auf, auf mindestens einen zweiten Code zu antworten;
(b) das Fahrzeug hält in der Vorwärtsbewegung an;
(c) das Fahrzeug beginnt die Vorwärtsbewegung;
(d) das Fahrzeug beginnt eine Rückwärtsbewegung;
(e) das Fahrzeug hält die Rückwärtsbewegung an.

17. Verfahren nach Anspruch 15, worin jeder Code einer Mehrzahl von Codes eine vorbestimmte Folge von Übergängen der Hindernisdetektorvorrichtung einschließt.

18. Verfahren nach Anspruch 17, worin eine Mehrzahl von Codes mindestens einen Code einschließt, dessen vorbestimmte Folge ein vorbestimmtes Zeitintervall zwischen zwei aufeinanderfolgenden Übergängen einschließt.

19. Verfahren nach Anspruch 1, worin der Schritt zur Identifizierung die Überwachung der Zeit einschließt, die sich auf die Eingabe des Codes bezieht.

20. Verfahren nach Anspruch 19, worin der Schritt der Inbezugnahme vom Betrag der Zeit abhängt, die überwacht wurde.

21. Verfahren nach Anspruch 1, worin der Schritt zur Identifizierung das Zählen der Änderungen in bezug auf den Schalter einschließt, welche auftreten, wenn der Code in die Hindernisdetektorvorrichtung eingegeben wird.

22. Verfahren nach Anspruch 21, worin die Anzahl der Änderungen in bezug auf den Schalter, welche gezählt werden, größer als 1 ist.

23. Vorrichtung zur Steuerung eines Fahrzeugs (100) eines Fördersystems, mit
einer Hindernisdetektorvorrichtung (112, 116), die an dem Fahrzeug vorgesehen ist, zum Erzeugen einer Mehrzahl von vorbestimmten Codes, welche in bezug mit einem Verhalten des Fahrzeugs stehen,
einer Decodiervorrichtung, die zum Identifizieren des vorbestimmten Fahrzeugverhaltens, welche sich auf die vorbestimmten Codes bezieht, wobei die Decodiervorrichtung Signale verwendet, welche sich auf die vorbestimmten Codes beziehen, und die von der Hindernisdetektorvorrichtung ausgegeben werden,
einer Antriebsvorrichtung, die auf den Ausgang der Decodiervorrichtung antwortet, zur Ausführung des vorbestimmten Verhaltens, das sich auf die Codes bezieht,
**dadurch gekennzeichnet, daß**
die Decodiervorrichtung zum Identifizieren des vorbestimmten Fahrzeugverhaltens derart ausgelegt ist, daß die Identifizierung der Codes anhand einer besonderen, vorbestimmten Sequenz von zeit bestimmten Prellschalter-Entspannungen und Prellschalter-Drücken erfolgt,
und abhängig von dem identifizierten Code Steuersignale ausgegeben werden, um das vorbestimmte Fahrzeugverhalten auszuführen.

24. Vorrichtung nach Anspruch 23, worin jeder Übergang der vorbestimmten Reihenfolge einen der folgenden Übergänge der Detektorvorrichtung einschließt: (a) vom Detektieren eines Hindernisses zu einem Nichtdetektieren eines Hindernisses und (b) vom Nichtdetektieren eines Hindernisses zu einem Detektieren eines Hindernissen

25. Vorrichtung nach Anspruch 23, worin die Codes im wesentlichen manuell eingegeben werden.

26. Vorrichtung nach Anspruch 23, worin das vorbestimmte Zeitintervall kürzer als jedes Zeitintervall bei einem unbeabsichtigten Eingeben der vorbestimmten Sequenz ist.

27. Vorrichtung nach Anspruch 23, worin die Hinternisdetektorvorrichtung kontaktempfindlich ist.

28. Vorrichtung nach Anspruch 23, worin die Codes verwendet werden für:
Veranlassen des Fahrzeuges, daß es nicht mehr auf mindestens einen ersten vorbestimmten Code einer Vielzahl von Codes antwortet;
Veranlassen des Fahrzeugs, sich in einer Richtung zu bewegen, die verschieden von der Vorwärtsrichtung ist.

29. Vorrichtung nach Anspruch 23, worin die Decodiervorrichtung eine Übergangsdetektorvorrichtung zum Detektieren der Übergänge der Hindernisdetektorvorrichtung einschließt.

30. Vorrichtung nach Anspruch 23, worin die Decodiervorrichtung eine Zeitgebervorrichtung zum Takten des vorbestimmten Zeitintervalls einschließt.

## Claims

1. A process for the control of a vehicle (100) within a conveyor system, comprising the following steps:
the activation of an obstacle detector device on the vehicle and thereby the production of a plurality of pre-determined codes;
the correlation of the codes with a pre-determined behavioural action of the vehicle;
the execution of the pre-determined behavioural action of the vehicle in relation to the codes,
characterised in that
the identification of the codes is effected with the aid of a particular pre-determined sequence of time-referenced releases and depressions of a bumper switch;
and that control signals dependent upon the identified codes are emitted in order to execute the pre-determined behavioural action of the vehicle.

2. A process according to claim 1, characterised in that the obstacle detector device comprises at least one front obstacle detector and one rear obstacle detector.

3. A process according to claim 2, characterised in that at least one of the front obstacle detectors and one of the rear obstacle detectors is a bumper switch.

4. A process according to claim 1, characterised in that the obstacle detector device is contact-sensitive.

5. A process according to claim 1, characterised in that the identification step includes a manual activation of the obstacle detector device for the input of the codes.

6. A process according to claim 1, characterised in that the correlation step includes the determining of a particular movement of the vehicle.

7. A process according to claim 1, characterised in that the codes include a pre-determined sequence of transitions of the obstacle detector device whereby each transition is one of the following: (a) changing of the obstacle detector device from the detecting of an obstacle to a non-detection of an obstacle, and (b) changing of the obstacle detector device from a non-detecting of an obstacle to a detection of an obstacle.

8. A process according to claim 7, characterised in that the identification step includes a detection of the pre-determined sequence of transitions of the obstacle detector device which derive from the input of the codes.

9. A process according to claim 7, characterised in that the correlation step includes an identification of the pre-determined sequence of transitions of the obstacle detector device.

10. A process according to claim 1, characterised in that the identification step includes a step for the reception of the codes from a front part of the obstacle detector device when the vehicle is essentially moving forwards, and for the reception of codes from a rear part of the obstacle detector device when the vehicle is essentially moving backwards.

11. A process according to claim 1, in which the execution steps include:
a first step by means of which the vehicle ceases to respond to at least one code; a second step whereby the vehicle moves itself backwards.

12. A process according to claim 11, characterised in that the first step includes the provision of at least one visual indication signal and one audio indication signal that the vehicle is ignoring the code.

13. A process according to claim 11, wherein the code is a backup-code.

14. A process according to claim 11, wherein the second step is implemented when the vehicle stops and the input of the code is effected using the rear part of the obstacle detector device.

15. A process according to claim 1, wherein a first code is identified from a plurality of codes and the plurality of codes furthermore includes at least a second code which comprises no pre-determined time delay.

16. A process according to claim 1, wherein the execution step produces at least one or several of the following behavioural actions of the vehicle:
(a) the vehicle stops in its forward movement;
(b) the vehicle starts its forward movement;
(c) the vehicle commences a movement backwards;
(d) the vehicle stops its backward movement.

17. A process according to claim 15, wherein each code of a plurality of codes includes a pre-determined sequence of transitions of the obstacle detector device.

18. A process according to claim 17, wherein a plurality of codes includes at least one code the pre-determined sequence of which comprises a pre-determined time delay between two consecutive transitions.

19. A process according to claim 1, wherein the identification step includes the monitoring of the time in reference to the input of the code.

20. A process according to claim 19, wherein the correlation step depends on the amount of time which has been monitored.

21. A process according to claim 1, wherein the identification step includes the counting of the changes, in reference to the switch, which occur when the input of the code into the obstacle detector device is effected.

22. A process according to claim 21, wherein the number of changes, in reference to the switch, which are counted is greater than 1.

23. A device for the control of a vehicle (100) within a conveyor system, with
an obstacle detector device (112, 116) which is provided on the vehicle for the production of a plurality of pre-determined codes which are correlated with a particular behavioural action of the vehicle,
a de-coding device for the identification of the pre-determined behavioural action which is correlated to the pre-determined codes, whereby the de-coding device uses signals which are correlated with the pre-determined codes and which are emitted from the obstacle detector device,
and a drive device which responds to the output from the de-coding device for the execution of the pre-determined behavioural action correlated to the codes,
characterised in that
the de-coding device for the identification of the pre-determined behavioural action of the vehicle is arranged in such a way that the identification of the codes is established with the aid of a particular and pre-determined sequence of time-referenced releases and depressions of the bumper switch,
and that control signals dependent upon the identified code are emitted in order to execute the pre-determined behavioural action of the vehicle.

24. A device according to claim 23, wherein each transition of the pre-determined sequence includes one of the following transitions of the detector device: (a) from the detection of an obstacle to a non-detection of an obstacle and (b) from the non-detection of an obstacle to a detection of an obstacle.

25. A device according to claim 23, wherein the input of the codes is essentially effected manually.

26. A device according to claim 23, wherein the pre-determined time delay is shorter than any time delay associated with an unintentional input of the pre-determined sequence.

27. A device according to claim 23, wherein the obstacle detector device is contact-sensitive.

28. A device according to claim 23, wherein the codes are used for:
causing the vehicle not to continue responding to at least one initial pre-determined code of a plurality of codes;
causing the vehicle to move itself in a direction which is other than the forward direction.

29. A device according to claim 23, wherein the de-coding device includes a transition detector device for the detection of the transitions of the obstacle detector device.

30. A device according to claim 23, wherein the de-coding device includes a time-indicating device for measuring the predetermined time delay.

## Revendications

1. Procédé pour commander un véhicule (100) d'un système de convoyage, comprenant les étapes suivantes :
- actionnement d'un dispositif de détection d'obstacles sur le véhicule et, de ce fait, production d'une multiplicité de codes prédéterminés ;
- association des codes à comportement prédéterminé du véhicule ;
- exécution du comportement prédéterminé du véhicule, qui se rapporte aux codes,
caractérisé en ce que
- l'identification des codes s'effectue sur la base d'une séquence particulière prédéterminé de détentes et de compressions, prédéterminées dans le temps, de commutateurs de détection de collision ;
- des signaux de commande sont délivrés en fonction des codes identifiés, pour l'obtention du comportement prédéterminé du véhicule.

2. Procédé selon la revendication 1, caractérisé en ce que le dispositif de détection d'obstacles comprend au moins un détecteur avant d'obstacles et un détecteur arrière d'obstacles.

3. Procédé selon la revendication 2, caractérisé en ce qu'au moins l'un des détecteurs avant d'obstacles et l'un des détecteurs arrière d'obstacles sont un commutateur de détection de collision.

4. Procédé selon la revendication 1, caractérisé en ce que le dispositif de détection d'obstacles est sensible à un contact.

5. Procédé selon la revendication 1, caractérisé en ce que l'étape d'identification comprend un actionnement manuel du dispositif de détection d'obstacles pour l'introduction des codes.

6. Procédé selon la revendication 1, caractérisé en ce que l'étape d'association comprend la détermination d'un déplacement du véhicule.

7. Procédé selon la revendication 1, caractérisé en ce que les codes englobent une suite prédéterminée de transition du dispositif de détection d'obstacles, chaque transition étant l'une des suivantes : (a) commutation du dispositif de détection d'obstacles de la détection d'un obstacle à une non détection d'un obstacle, et (b) commutation du dispositif de détection d'obstacles depuis une non détection d'un obstacle à une détection d'un obstacle.

8. Procédé selon la revendication 7, caractérisé en ce que l'étape d'identification inclut une détection de la suite prédéterminée de transitions du dispositif de détection d'obstacles, qui sont dues à l'introduction des codes.

9. Procédé selon la revendication 7, caractérisé en ce que l'étape d'association inclut une identification de la suite prédéterminée de transition du dispositif de détection d'obstacles.

10. Procédé selon la revendication 1, caractérisé en ce que l'étape d'identification inclut une étape pour la réception des codes par une partie avant du dispositif de détection d'obstacles lorsque le véhicule se déplace essentiellement en marche avant, et pour la réception de codes par une partie arrière du dispositif de détection d'obstacles, lorsque le véhicule se déplace essentiellement en marche arrière.

11. Procédé selon la revendication 1, dans lequel les étapes d'exécution comprennent :
une première étape, au moyen de laquelle le véhicule cesse de répondre à au moins un code ; une seconde étape, avec laquelle le véhicule se déplace en marche arrière.

12. Procédé selon la revendication 11, caractérisé en ce que la première étape comprend la délivrance d'au moins un affichage visuel et un affichage acoustique indiquant que le véhicule ignore le code.

13. Procédé selon la revendication 11, selon lequel le code est un code Backup.

14. Procédé selon la revendication 11, selon lequel la seconde étape est exécutée lorsque le véhicule s'arrête et que le code est introduit moyennant l'utilisation de la partie arrière du dispositif de détection d'obstacles.

15. Procédé selon la revendication 1, selon lequel un premier code est identifié par une multiplicité de codes et la multiplicité de codes inclut au moins en outre un second code, qui ne comprend aucun intervalle de temps prédéterminé.

16. Procédé selon la revendication 1, selon lequel l'étape d'exécution déclenche au moins un ou plusieurs des comportements suivants du véhicule :
(a) le véhicule s'arrête de répondre à au moins un second code ;
(b) le véhicule s'arrête lors du déplacement de marche avant ;
(c) le véhicule commence le déplacement en marche avant ;
(d) le véhicule commence un déplacement en marche arrière ;
(e) le véhicule cesse de se déplacer en marche arrière.

17. Procédé selon la revendication 15, selon lequel chaque code d'une multiplicité de codes inclut une suite prédéterminée de transition du dispositif de détection d'obstacles.

18. Procédé selon la revendication 17, selon lequel une multiplicité de codes inclut au moins un code, dont la succession prédéterminée inclut un intervalle de temps prédéterminé entre deux transitions successives.

19. Procédé selon la revendication 1, dans lequel l'étape d'identification inclut le contrôle du temps, qui se rapporte à l'introduction du code.

20. Procédé selon la revendication 19, selon lequel l'étape d'association dépend de la valeur du temps, qui a été contrôlée.

21. Procédé selon la revendication 1, selon lequel l'étape d'identification inclut le comptage des variations en rapport avec le commutateur, qui apparaissent lorsque le code est introduit dans le dispositif de détection d'obstacles.

22. Procédé selon la revendication 21, selon lequel le nombre des commutations en rapport avec le commutateur, qui sont comptées, est supérieur à 1.

23. Dispositif pour la commande d'un véhicule (100) d'un système de convoyage, comprenant
un dispositif de détection d'obstacles (112, 116), qui est prévu sur le véhicule, pour produire une multiplicité de codes prédéterminés, qui sont associés à un comportement du véhicule,
un dispositif de codage qui sert à identifier le comportement prédéterminé du véhicule, qui est associé aux codes prédéterminés, le dispositif de décodage utilisant des signaux qui sont associés aux codes prédéterminés et qui sont délivrés par le dispositif de détection d'obstacles,
un dispositif d'entraînement, qui répond au signal de sortie du dispositif de décodage, pour l'exécution du comportement prédéterminé qui se rapporte aux codes,
caractérisé en ce que
le dispositif de décodage pour l'identification du comportement prédéterminé du véhicule est conçu de telle sorte que l'identification des codes s'effectue sur la base d'une séquence particulière prédéterminée de détentes et de compressions des codes déterminés dans le temps, des commutateurs de détection de chocs, et
des signaux de commande sont conçus en fonction du code identifié pour l'obtention du comportement prédéterminé du véhicule.

24. Dispositif selon la revendication 23, dans lequel chaque transition de la séquence prédéterminée inclut l'une des transitions suivantes du dispositif de détection : (a) commutation de la détection d'un obstacle à une non détection d'un obstacle et (b) de la non détection d'un obstacle à une détection d'un obstacle.

25. Dispositif selon la revendication 23, dans lequel les codes sont introduits essentiellement manuellement.

26. Dispositif selon la revendication 23, dans lequel l'intervalle de temps prédéterminé est inférieur à chaque intervalle de temps lors d'une introduction inattendue de la séquence prédéterminée.

27. Dispositif selon la revendication 23, dans lequel le dispositif de détection d'obstacles est sensible à un contact.

28. Dispositif selon la revendication 23, dans lequel les codes sont utilisés pour :
commander le véhicule de manière qu'il ne réponde plus à au moins un premier code prédéterminé d'une multiplicité de codes ;
commander le véhicule pour qu'il se déplace dans une direction qui est différente de la direction de marche avant.

29. Dispositif selon la revendication 23, dans lequel le dispositif de décodage est un dispositif de détection de transitions servant à détecter les transitions du dispositif de détection d'obstacles.

30. Dispositif selon la revendication 23, dans lequel le dispositif de décodage inclut un dispositif formant minuterie pour réaliser la commande cadencée d'un intervalle de temps prédéterminé.
